# EUROPÄISCHE PATENTSCHRIFT

(11) **EP 1 159 870 B1**
(45) Veröffentlichungstag und Bekanntmachung des Hinweises auf die Patenterteilung: **30.03.2005**
(21) Anmeldenummer: 01113343.6
(22) Anmeldetag: 01.06.2001
(51) Int. Cl.: A01G 3/02

(54) **Schere, insbesondere handgehaltene Garten- oder Astschere**
Shears, particularly handheld garden or branch secateurs
Cisaille, notamment sécateur manuel pour le jardin et les branches

(30) Priorität: 03.06.2000 DE 10027648
(43) Veröffentlichungstag der Anmeldung: 05.12.2001
(73) Patentinhaber: GARDENA Manufacturing GmbH, 89079 Ulm (DE)
(72) Erfinder:
(74) Vertreter: Patentanwälte Ruff, Wilhelm, Beier, Dauster & Partner

(56) Entgegenhaltungen:
- DE-U- 1 693 636
- US-A- 2 775 032
- US-A- 4 809 433
- US-A- 5 226 236
- US-A- 5 809 654

## Beschreibung

Die Erfindung betrifft eine Schere, insbesondere eine handgehaltene Garten- oder Astschere, gemäß dem Oberbegriff von Anspruch 1.

Derartige Scheren haben zwei um eine Schwenkachse gegeneinander verschwenkbare Scherenelemente, die zum gegenseitigen Schneideingriff vorgesehene Eingriffsabschnitte aufweisen. Die Eingriffsabschnitte bilden bzw. begrenzen im geöffneten Zustand der Schere eine sich von der Schwenkachse normalerweise kontinuierlich erweiternde Scherenöffnung, die sich beim Schließen der Schere, also bei der Einleitung und Durchführung des Schneidvorganges, verkleinert. Bei Scheren dieser Art besteht häufig das Problem, daß Schnittgut mit relativ hohem Schnittwiderstand, beispielsweise ein Blumenstängel oder ein Ast, beim Schließen der Schere dazu neigt, aus der Scherenöffnung bzw. dem Scherenmaul herausgedrückt zu werden. Zur Vollendung eines Schnittes muß dann ggf. mehrmals nachgefaßt werden oder es ist eine zweite Hand zum Festhalten des Schnittgutes erforderlich, um dem Herausdrängen des Schnittgutes aus der Scherenöffnung entgegenzuwirken.

Die US 5,226,236 beschreibt eine Ambossschere mit feststehenden Widerhaken, die auf einer Ambossfläche vorgesehen sind und die durch Formschluss mit dem Schnittgut ein Ausweichen von Schnittgut vor einer Klinge der Ambossschere verhindern sollen. Durch die feststehenden Widerhaken wird eine feste Position des Schnittguts gegenüber der Klinge definiert, so dass die Schnittkraft auf das Schnittgut abhängig vom Durchmesser des Schnittguts ist und nicht vom Benutzer durch eine frei wählbare Positionierung längs der Klinge gewählt werden kann.

In der US 2,775,032 wird eine Baumschere beschrieben, bei der an einer Schneidklinge ein elastisches Greifelement angebracht ist, während an einem Amboss ein starres Greifelement vorgesehen ist. Das elastische Greifelement ist gegenüberliegend zu dem starren Greifelement angeordnet, so dass bei einer relativen Bewegung der Schneidklinge in Richtung des Amboss zum Trennen von Schnittgut auch eine Annäherung des elastischen Greifelementes auf das starre Greifelement stattfindet. Dabei kann das Schnittgut von dem elastischen Greifelement auf das starre Greifelement gepresst werden, wobei das elastische Greifelement deformiert wird und dadurch mit Formschluss das Schnittgut so lange halten kann, bis der Bediener die Baumschere wieder öffnet und damit durch Entfernen des elastischen Greifelements vom starren Greifelement den Formschluss wieder aufhebt.

Die DE 1 693 636 beschreibt eine Rebenschere, die mit einem seitlich angeordneten, winklig abstehenden Auflager versehen ist und die mittels des Auflagers in formschlüssiger Weise ein Ausweichen von Schnittgut während des Schneidvorganges verhindern soll. Das Auflager ist gekehlt ausgeführt und mit einer Riffelung oder Zahnung versehen. Damit soll sichergestellt werden, dass das foxrnschlüssig aufgenommene Schnittgut bei Aufbringen von Schnittkräften nicht aus der Kehlung ausweichen kann.

Der Erfindung liegt die Aufgabe zugrunde, diese Nachteile des Standes der Technik zu vermeiden. Insbesondere soll eine Schere geschaffen werden, die es ohne Änderung ihrer sonstigen, vertrauten Funktionen ermöglicht, Schnittgut, wie z.B. Blumenstängel oder Äste, in einem einzigen, ununterbrochenen Schnittvorgang zuverlässig zu zertrennen.

Zur Lösung dieser Aufgabe schlägt die Erfindung eine Schere mit den Merkmalen von Anspruch 1 vor. Bevorzugte Weiterbildungen sind in den abhängigen Ansprüchen angegeben. Der Wortlaut sämtlicher Ansprüche wird durch Bezugnahme zum Inhalt der Beschreibung gemacht.

Eine erfindungsgemäße Schere zeichnet sich demnach dadurch aus, daß gesonderte, im wesentlichen nur bis zur Vollendung eines Schnittvorganges wirksame Haltemittel zum Festhalten von in die Scherenöffnung eingeführtem Schnittgut während des Schließens der Schere vorgesehen sind. Dadurch kann erreicht werden, daß das Schnittgut während des Schließvorganges der Schere zuverlässig in der Scherenöffnung gehalten wird, so daß das beschriebene Ausgleiten bzw. Herausdrücken aus dem Scherenmaul vermieden oder zumindest weitgehend unterdrückt wird. Dadurch kann ein Schnitt in einem einzigen Schließvorgang der Schere vollendet und das Schnittgut vollständig durchtrennt werden. Sobald das Schnittgut jedoch durchschnitten ist, vermindert sich die Haltewirkung der Haltemittel selbstätig bzw. automatisch so stark, daß die zertrennten Teile des Schnittgutes, genau wie bei herkömmlichen Scheren, von selbst abfallen oder aber die Schere vom Schnittgut weggenommen werden kann, ohne daß vorher die Schere wieder geöffnet werden muß.

Während bei Scheren mit gezahnten Schneiden eine derartige Haltewirkung zumindest teilweise durch die Zahnung der Eingriffsabschnitte selbst erreicht werden kann, ist durch die erfindungsgemäße Bereitstellung von gesonderten Haltemitteln, also von zusätzlich zu den Scherenelementen vorgesehenen Haltemitteln, die erfindungsgemäße Wirkung bei jeder Art von Scheren erzielbar, insbesondere auch bei Scheren mit glatten Schneidkanten, die für viele Schneidarbeiten, besonders im Gartenbereich, aufgrund des erzeugbaren glatten, nicht ausgefransten Schnittes bevorzugt werden.

Dadurch, daß die Freigabe von Schnittgut aus der Schere automatisch nach Vollendung des Schnittes erfolgt, ohne daß hierzu die Schere wieder geöffnet werden muß, unterscheiden sich erfindungsgemäße Scheren deutlich von anderen bekannten Scheren, bei denen gesonderte Haltemittel vorgesehen sind, um das zertrennte Schnittgut nach Vollendung des Schnittes an der Schere festzuhalten, solange diese geschlossen bleibt. Ein Beispiel für eine derartige, insbesondere als Rosenschere ausgebildete Gartenschere ist in der DE 81 11 164 gezeigt. Auch die in der DE 43 02 136 gezeigte Ernteschere ist durch parallel zu den Schneidkanten verlaufende Halteelemente so ausgebildet, daß auf die abgetrennten Teilstücke von Schnittgut nach Vollendung des Schnittes bei geschlossener Schere eine Klemmwirkung ausgeübt wird, wodurch ein Herabfallen des abgeschnittenen Teilstückes, beispielsweise bei der Ernte von Baumobst, verhindert werden kann. Auch in den US-Patenten 1,458,878 und US 1,151,874 sind gattungsgemäße Scheren mit Haltemitteln gezeigt, die es ermöglichen, zertrenntes Schnittgut bei geschlossener Schere festzuhalten und beispielsweise mit Hilfe der geschlossenen Schere abzutransportieren. Derartige Scheren stellen also im wesentlichen auf die Haltefunktion der Schere nach vollendetem Schnitt ab und erfordern von einem Bediener ein Umdenken bzgl. der Handhabung im Vergleich zu herkömmlichen Scheren ohne Haltemittel. Bei erfindungsgemäßen Scheren dagegen sind die Haltemittel im wesentlichen nur während des Schneidvorganges selbst, also bis zur vollständigen Zertrennung des Schnittgutes wirksam, danach verhält sich die Schere weitgehend wie eine Schere ohne Haltemittel, so daß ein an herkömmliche, haltemittelfreie Scheren gewöhnter Benutzer bei Gebrauch erfindungsgemäßer Scheren insoweit nicht umlernen muß. Jedoch werden Schneidarbeiten bei Gebrauch erfindungsgemäßer Scheren zuverlässig und schneller durchführbar, da jeweils nur ein Ansetzen der Schere notwendig ist, um einen Schnittvorgang einzuleiten und zu vollenden. Zudem hat ein Benutzer die andere Hand regelmäßig frei, um sich beispielsweise beim Arbeiten in Baumkronen festhalten zu können, wodurch dank erfindungsgemäßer Scheren auch die Arbeitssicherheit verbessert wird.

Nach einer bevorzugten Weiterbildung bilden die Haltemittel mindestens eine elastisch nachgiebige Halteoberfläche und sind derart ausgebildet und angeordnet, daß das noch nicht oder nicht vollständig zertrennte Schnittgut durch das Schließen der Schere bzw. durch die Verkleinerung der Scherenöffnung mittels der Scherenelemente unter Aufbau von Reibung flächig an die Halteoberfläche angepreßt wird und nach Vollendung der Durchtrennung unter Abbau des Anpreßdrukes von der Halteoberfläche freigebbar ist. Durch die elastisch nachgiebige Halteoberfläche ist eine Haltekraft erzeugbar, die mit zunehmendem Schneiddruck und entsprechend zunehmender Tendenz zum Herausdrücken des Schnittgutes aus der Scherenöffnung zunimmt und entsprechend bei abnehmendem Schneiddruck, d.h. nach Durchtrennung des Schnittgutes, so weit abnimmt, daß die Haltefunktion entfällt und das Schnittgut freigegeben wird. Es wird also eine mindestens teilweise vom Schneiddruck abhängige Rutschhemmung geschaffen.

Die Haltemittel werden vorzugsweise dadurch gebildet, daß mindestens ein gesondertes, gummielastisches Halteelement vorgesehen ist, das, vorzugsweise lösbar bzw. auswechselbar, an einem der Scherenelemente angebracht ist. Das Halteelement kann dabei im wesentlichen aus Gummi oder einem gummielastischen Kunststoff bestehen und/oder einstückig ausgebildet sein. Derartige gummielastische Formkörper sind kostengünstig in jeder geeigneten Form herstellbar und können mit einer ihrer Außenflächen die elastisch nachgiebige Haltefläche bilden.

Es existieren verschiedene Möglichkeiten, derartige gummielastische Halteelemente an der Schere bzw. einem Scherenelement geeignet anzubringen. Bei einer Weiterbildung ist vorgesehen, daß an mindestens einem der Scherenelemente mindestens eine Aufnahmeöffnung zur vorzugsweise verliersicheren Aufnahme mindestens eines gummielastischen Halteelementes ausgebildet ist. Die Aufnahme kann integral mit dem Körper des Scherenelementes beispielsweise als Bohrung oder bohrungsartige Öffnung ausgebildet sein, in die ein gummielastisches Element leicht komprimiert und dadurch weitgehend selbsthaltend einsteckbar ist. Damit kann ein Halteleement räumlich in ein Scherenelement so integriert sein, daß es weitgehend vom Material des Scherenelementes umgeben ist und im wesentlichen nur ein Abschnitt mit der Halteoberfläche an geeigneter Stelle freiliegt. Zweckmäßig ist die Aufnahmeöffnung so ausgerichtet, daß das Halteelement durch den Schneiddruck beim Schneiden fester in die Aufnahmeöffnung eindrückbar und dadurch verliersicher gehalten ist.

Es ist auch möglich, daß mindestens eine von einem Scherenelement gesonderte und an dem Scherenelement vorzugsweise lösbar befestigbare Befestigungseinrichtung zur Befestigung mindestens eines gummielastischen Halteelementes an dem Scherenelement vorgesehen ist. In diesem Fall müssen am Scherenelement lediglich Einrichtungen, beispielsweise in Form von Gewindebohrungen, vorgesehen sein, die eine Befestigung der Befestigungseinrichtung ermöglichen. Diese kann zusammen mit dem Scherenelement eine Aufnahmeöffnung für das Halteelement bilden und beispielsweise nach Art einer Klemmeinrichtung wirken, um das Halteelement verliersicher am Scherenelement zu sichern.

Es ist auch möglich, daß die Haltemittel mindestens ein gummielastisches Halteelement aufweisen, daß selbsthaltend an einem Scherenelement anbringbar ist, wobei es insbesondere an das Scherenelement ansteckbar bzw. aufsteckbar und/oder an diesem festklemmbar ausgebildet ist. In diesem Fall kann auf gesonderte Aufnahmeöffnungen und/oder gesonderte Befestigungseinrichtungen am Scherenelement verzichtet werden, weil das Halteelement selbst nach Art einer Befestigungseinrichtung wirkt.

Zur Schonung der Halteelemente gegen Überbelastung beim Schneiden ist nach einer Weiterbildung vorgesehen, daß mindestens ein Halteelement derart in einer zugeordneten Aufnahmeöffnung anordenbar ist, daß ein die Haltefläche bildender Überstandsabschnitt des Halteelementes im Bereich einer an der Eingriffsfläche des Scherenelementes angeordneten Mündung der Aufnahmeöffnung über die Eingriffsfläche des Scherenelementes geringfügig hinausragt. Dabei ist die Höhe des Überstandsabschnittes vorzugsweise so dimensioniert, daß das Halteelement aufgrund des Schneiddruckes so weit zusammendrückbar ist, bis es in die Aufnahmeöffnung versenkt ist. Hierdurch ist eine Wegbegrenzung des Zusammendrückens geschaffen und damit ein Schutz des Halteelementes gegen Überlastung. Die Haltefunktion des Halteelementes bleibt dabei erhalten, da das zusammengedrückte Halteelement im Bereich der Mündung weiterhin auf das auf der Eingriffsfläche aufliegende Schnittgut drückt und dieses festhält.

Es trägt ebenfalls zur Schonung der Haltemittel gegen Beschädigung bei, daß gemäß einer Weiterbildung Haltemittel außerhalb bzw. neben einem vorzugsweise langgestreckten Schneidbereich liegen, in dem der Schneideingriff zwischen den Scherenelementen erfolgt. Damit wirkt keine Schneide eines Scherenelementes direkt auf die Haltemittel, wodurch insoweit eine Beschädigung vermieden wird. Zweckmäßig liegen die Haltemittel jedoch so nah, z.B. mit einem geringen seitlichen Abstand zum Schneidbereich, daß der durch eine Schneide am Schnittgut erzeugte Schneiddruck bei geeigneter Biegesteifigkeit des Schnittgutes zum Bereich der Halteoberfläche am Haltemittel übertragbar ist.

Es kann ausreichen, Haltemittel nur an einer Seite des Schneidbereiches vorzusehen, so daß sich das Schnittgut an der gegenüberliegenden Seite direkt an einem Scherenelement abstützen kann. Derartige Ausführungen sind besonders kostengünstig. Jedoch können auch an beiden Seiten des Schneidbereiches Haltemittel vorgesehen sein. Als Alternative, ggf. auch zusätzlich zu seitlich angeordneten Haltemitteln, können auch im Schneidbereich Haltemittel angeordnet sein, die dann mit der Halteoberfläche gleichzeitig auch eine Gegenfläche für eine Schneidkante des anderen Scherenelementes bilden. Zwischen diesen Möglichkeiten kann je nach Bauart der Schere und gewünschter Anwendung gewählt werden.

Bei einer im Zusammenhang mit den Ausführungsbeispielen näher erläuterten Weiterbildung ist die Schere als Amboßschere ausgebildet, indem nur ein Scherenelement als Eingriffsabschnitt eine vorzugsweise glatte Schneide hat und an dem anderen Scherenelement, dem Amboß, eine selbst nicht schneidende Gegenfläche für die Schneide ausgebildet ist, auf die die Schneide zur Erzeugung eines einseitigen Schneideingriffes nach Art eines Messers aufdrückbar ist. Der normalerweise massive und im Vergleich zu normalen Schneiden breite Amboß bildet eine breite Schneidauflage, auf der das Schnittgut über eine gewisse quer zum Schneidbereich verlaufende Länge beim Schneiden abgestützt wird. Vorzugsweise sind die Haltemittel ausschließlich an dem als Amboß ausgebildeten Scherelement angeordnet, das aufgrund seiner Breite und massiven Ausbildung ausreichend Raum zur Anbringung von Aufnahmeöffnungen für Halteelemente bietet. Das mit einer Schneide versehene Scherenelement kann im Vergleich zu herkömmlichen bauartähnlichen Scheren unverändert bleiben. Bei derartigen Ausführungsformen sind die Haltemittel also nur an einem der Scherenelemente angebracht. Es ist jedoch auch möglich, an beiden Scherenelementen identische oder unterschiedliche Haltemittel vorzusehen, die zweckmäßig zusammenwirken können.

Es ist auch möglich, daß die Schere als Zweischneiden-Schere ausgebildet ist, bei der also jedes Scherenelement als Eingriffsabschnitt eine Schneide oder Schneidkante hat, wobei die Eingriffsabschnitte beim Schneiden scherenartig aneinander vorbeigleiten. Insbesondere kann eine Zweischneiden-Schere mit einer schmalen Obermesserklinge und einem Untermesser mit breiter, nur geringfügig angeschrägter Klingenkante ausgebildet sein, die in der Regel gegenüber dem Obermesser im Schneidkantenbereich massiver ausgebildet ist. Auch hier bietet es sich an, das massivere Scherenelement, nämlich das Untermesser, zum Anbringen der Haltemittel zu nutzen.

Diese und weitere Merkmale ergeben sich aus den Ansprüchen. Die einzelnen Merkmale können jeweils für sich allein oder zu mehreren in Form von Unterkombinationen bei einer Ausführungsform der Erfindung und auf anderen Gebieten verwirklicht sein und vorteilhafte Ausführungen darstellen.

Ausführungsbeispiele der Erfindung sind in den Zeichnungen dargestellt und werden im folgenden näher erläutert. In den Zeichnungen zeigen:
- Fig. 1 eine: Seitenansicht einer bevorzugten Ausführungsform einer mit erfindungsgemäßen Haltemitteln versehenen Amboßschere, bei der die Haltemittel seitlich neben dem Schneidbereich angeordnet sind,
- Fig. 2: eine Draufsicht auf die Amboßschere von Fig. 1,
- Fig. 3: eine Seitenansicht einer mit erfindungsgemäßen Haltemitteln ausgestatteten Zweischneiden-Schere,
- Fig. 4: einen schematischen Vertikalschnitt durch die Scherenelemente einer Zweischneiden-Schere mit am Untermesser angebrachten Haltemitteln,
- Fig. 5: einen schematischen Vertikalschnitt durch eine andere Ausführungsform einer Zweischneiden-Schere mit seitlich neben dem Schneidbereich angeordneten Haltemitteln am Untermesser,
- Fig. 6: eine Seitenansicht (oben) und eine Draufsicht (unten) auf eine andere Ausführungsform einer Amboßschere, bei der Haltemittel mittig auf der Amboßfläche im Schneidbereich angeordnet sind,
- Fig. 7: eine Ausführungsform mit mittig mit der Amboßfläche angeordneten Haltemitteln, die im wesentlichen die gesamte Länge des Ambosses einnehmen,
- Fig. 8: eine Ausführungsform mit mehreren im Schneidbereich angeordneten Haltemitteln und
- Fig. 9: einen schematischen Vertikalschnitt durch eine Ausführungsform einer Amboßschere mit im Schneidbereich angeordneten Haltemitteln.

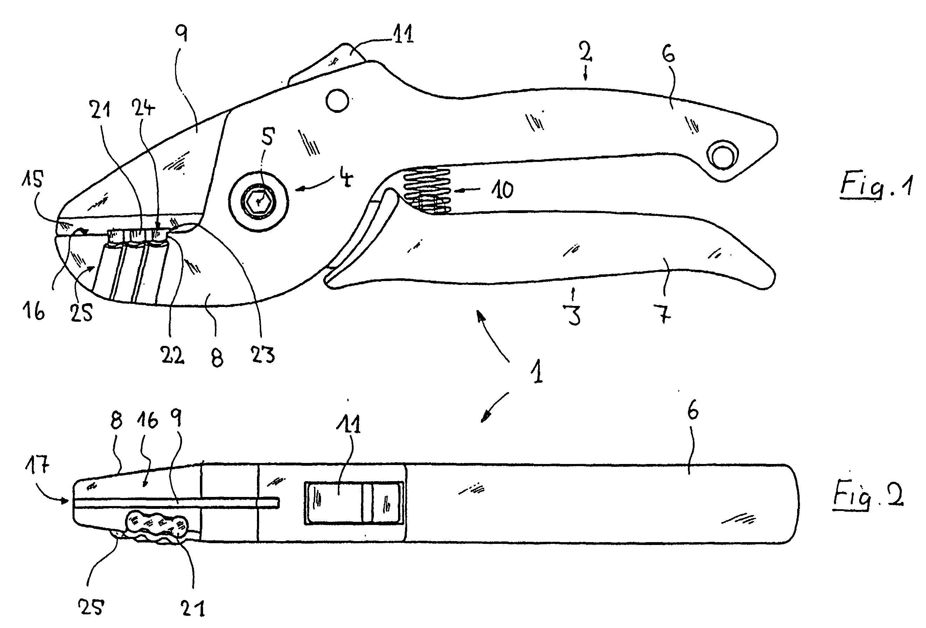

Die Seitenansicht in Fig. 1 zeigt eine als Amboßschere ausgebildete Schere 1, die als handgehaltene Garten- oder Astschere im Haus- und Gartenbereich z.B. zum Zerschneiden von vorwiegend pflanzlichem Schnittgut, wie Blütenstängeln, Ästen o. dgl. verwendbar ist. Die Schere hat zwei in sich jeweils starre Scherenarme 2, 3, die im Bereich eines Schwenkgelenkes 4 miteinander beweglich verbunden und um eine Schwenkachse 5 in einer parallel zur Papierebene verlaufenden Ebene gegeneinander verschwenkbar sind. Jeder der sich im Bereich des Schwenkgelenkes kreuzenden Scherenarme hat einen in der Zeichnungsfigur rechts erkennbaren, als Handgriff dienenden Betätigungsabschnitt 6, 7 und auf der anderen Seite des Drehgelenkes ein mit dem jeweiligen Betätigungsabschnitt starr und ggf. einstückig verbundenes Scherenelement 8, 9. Die Schere wird mittels einer zwischen den Betätigungsabschnitten angeordneten Schraubendruckfeder 10 in eine Öffnungsstellung der Scherenarme bzw. Scherenelemente vorgespannt und ist in der gezeigten Schließstellung durch nicht gezeigt Rastmittel arretierbar, wobei die Arretierung durch Betätigung eines an der Oberseite des Scherenarmes 2 angeordneten Betätigungsknopfes 11 aktivierbar bzw. freigebbar ist.

Das mit dem unteren Handgriffabschnitt 7 gekoppelte, in der Zeichnungsfigur oben liegende Scherenelement 9 aus Stahl ist nach Art eines im wesentlichen dreieckförmigen Messers ausgebildet, an dessen dem anderen Scherenelement 8 zugewandter Schmalseite eine scharfkantige, gerade Schneide 15 ausgebildet ist.

Das gegenüberliegende Scherenelement 8 ist deutlich breiter und massiver als das Messer 9 und hat eine der Schneide 15 zugewandte, in Draufsicht (Fig. 2) trapezförmig erscheinende Oberseite 16, die auch als Amboßfläche bezeichnet wird. Die sich zum Vorderende der Schere verjüngende Amboßfläche und die mittig auf die Amboßfläche auftreffende Schneide 15 bilden die Eingriffsabschnitte, die bei Benutzung der Schere am Schnittgut angreifen und in einem mittig zum Amboß 8 angeordneten Schneidbereich 17 zur Erzeugung eines Schneideingriffes zusammenwirken. Dabei erfolgt ein Einschnitt in das quer zur Längsrichtung des Messers 9 eingeführte Schnittgut einseitig nur von Seiten der Schneide 15, während die breite Amboßfläche als Auflage für das Schnittgut sowie als (selbst nicht schneidendes) Gegenelement zur Schneide des Messers 9 dient.

Im geöffneten Zustand der Schere schließen die Eingriffsabschnitte 15, 16 eine etwa dreieckförmige Scherenöffnung bzw. ein Scherenmaul ein, das sich vom Drehgelenk 4 bis zum den Handgriffen 2, 3 abgewandten Vorderende der Schere keilartig erweitert und das sich beim Schließen der Schere unter Verringerung des Aufweitungswinkels bis zur gegenseitigen Berührung der Eingriffsabschnitte 15, 16 verkleinert. Dabei tritt bei herkömmlichen derartigen Scheren das Problem auf, daß ein bei geöffneter Schere zwischen Schneide 15 und Amboßfläche 16 eingelegter Ast o. dgl. aufgrund der Keilwirkung der Scherenelemente aus der Scherenmaulöffnung herausgedrückt werden kann, bevor eine vollständige Durchtrennung möglich ist. Dem kann auch häufig dann nicht völlig entgegengewirkt werden, wenn die Amboßoberfläche 16, wie im gezeigten Ausführungsbeispiel, durch Querriffelung strukturiert ist und dadurch auf das angedrückte Schnittgut eine gewisse Haltewirkung gegen Ausgleiten ausübt.

Um diesem Problem entgegenzuwirken, sind bei der Schere 1 gesonderte Haltemittel zum Festhalten von in die Scherenöffnung eingeführtem Schnittgut während des Schließens der Schere bzw. während des Schnittvorgangs vorgesehen. Die ausschließlich am Amboß 8 vorgesehenen Haltemittel umfassen als wesentliches Element ein gummielastisches Halteelement 21, das im Beispiel als ein einstückiges, gummielastisches Kunststoffteil aus einem spritzgegossenen thermoplastischen Elastomer ausgebildet ist. Es kann auch aus anderen Materialien mit vergleichbaren elastischen Eigenschaften gefertigt sein, beispielsweise aus Gummi, und wird im folgenden vereinfacht auch als Gummikörper oder Gummikissen 21 bezeichnet. Der Gummikörper 21 ist in eine formangepaßte Aufnahmeöffnung 22 des Amboß-Scherenelementes 8 eingelegt, wobei die Dimensionierung des Gummikörpers derjenigen der Aufnahmeöffnung so angepaßt ist, daß das elastische Element 21 geringfügig komprimiert in der Aufnahmeöffnung sitzt und dadurch selbsthaltend gegen Herausfallen gesichert ist. Der Gummikörper hat, wie die Draufsicht in Fig. 2 zeigt, die Form dreier in Reihe nebeneinander liegender Kreiszylinder, die über dünnere Halsabschnitte oder Taillenabschnitte miteinander verbunden sind. Die Aufnahmeöffnung hat entsprechend die Form dreier achsparalleler Zylinderbohrungen, die unter Bildung von Verjüngungsabschnitten ineinander übergehen. Die drei runden Kanäle der Aufnahmeöffnung 22 verlaufen im wesentlichen senkrecht zur Amboßfläche 16 bis zu einer Tiefe von einigen Millimetern. Die Dimensionen des Gummikörpers 21 sind an diejenigen der Aufnahmeöffnung so angepaßt, daß der Gummikörper mit einem Überstandsabschnitt 23 von beispielsweise einem halben Millimeter Höhe über die Amboßfläche 16 hinausragt. Die oberhalb der Mündung der Aufnahmeöffnung freiliegende Oberfläche des Gummikörpers 21 bildet eine elastisch nachgiebige Halteoberfläche 24 der Haltemittel.

Unterhalb der Haltemittel ist an der in Fig. 1 sichtbaren Außenseite des Amboß 8 eine Verzierung 25 in Form von drei in Richtung zum Drehgelenk 4 angeschrägten runden Wülsten vorgesehen, die mit der Form des Gummikörpers und der Aufnahmeöffnung korrespondieren.

Die Verzierung 25 erleichtert die Unterscheidung erfindungsgemäßer Amboßscheren mit Haltemitteln von entsprechenden Scheren ohne diese Haltemittel.

Wie in Fig. 2 zu erkennen ist, ist die Aufnahmeöffnung 22 bzw. der darin aufgenommene Gummikörper 21 nicht in dem Schneidbereich 17, also dem schmalen Schnittbereich zwischen der durch das Obermesser 9 verlaufenden Ebene und der Amboßfläche 16 angeordnet, sondern liegt seitlich versetzt neben diesem Schneidbereich im wesentlichen noch innerhalb der Amboßfläche 16. Dadurch ist die Haltewirkung gewährleistet, ohne daß der Gummikörper von der Schneidkante 15 berührt und ggf. von dieser angeschnitten werden kann. Es können auch auf beiden Seiten des Schneidbereiches 25, ggf. symmetrisch zu diesem, Haltemittel der gezeigten oder einer gleich oder ähnlich wirkenden Art vorgesehen sein.

Wird nun bei geöffneter Schere ein Ast, ein Blumenstängel o. dgl. in die Scherenöffnung eingeführt und die Schere zum Zerschneiden des Schnittgutes langsam geschlossen, so drückt sich das Schnittgut beim Schließen der Schere in den Gummikörper 21 bis zur Amboßoberfläche 16 ein, wodurch der Gummikörper wegbegrenzt zusammengedrückt wird. Dabei wird der Gummikörper zusammengedrückt, bis die Halteoberfläche 24 stellenweise weitgehend bündig mit der Amboßoberfläche 16 ist. Ein weiteres Zusammendrücken des Gummielementes, das zur Zerstörung derselben führen könnte, wird vermieden. Durch das Zusammendrücken des Gummikörpers wird ein Reibungsschluß zwischen diesem und dem Schnittgut erzeugt, das durch diesen Reibungsschluß gegen Ausgleiten aus dem Scherenmaul gesichert wird, solange ein von der Schneide 15 ausgeübter Schneiddruck auf dem Schnittgut lastet. Sobald jedoch der Schnittvorgang vollendet und das Schnittgut vollständig durchtrennt ist, bricht dieser Anpreßdruck zusammen und das Schnittgut wird, ohne vorherige Öffnung der Schere, von dieser freigegeben.

Derartige Gummikissen sind gerade bei Amboßscheren nicht nur wegen dieser beschriebenen Haltewirkung sehr vorteilhaft. Es hat sich nämlich gezeigt, daß bei Verwendung von Amboßscheren beispielsweise zum Abtrennen von Ästen eines Baumes aufgrund des Anpreßdruckes zwischen dem breiten Amboß und dem in diesem Bereich liegenden Schnittgut am Schnittgut Druckstellen entstehen können, die bei dem am Baum verbleibenden Aststück manchmal besonders anfällig für Pilzbefall sind, da sie eine Schädigung der Außenhaut des Baumes darstellen. Bei Verwendung einer erfindungsgemäß ausgestalteten Amboßschere können derartige Probleme vermieden werden, da die gummielastischen Haltemittel gleichzeitig auch eine Polsterwirkung für das in diesem Bereich zum Abmoß hin gedrückte lebende Schnittgut bereitstellt. Dadurch, daß sich beim Schnittvorgang die Auflagefläche zwischen Haltemittel 21 und
Schnittgut vergrößert, wird der lokal auf das Schnittgut wirkende Druck auf Amboßseite so weit herabgesetzt, daß die beschriebenen Verletzungen der Baumrinde vermieden werden können. Zweckmäßig wird daher eine Amboßschere mit einem nur einseitigen Gummikissen, wie bei der gezeigten Ausführungsform, so verwendet, daß die mit Gummikissen bzw. Polsterung versehen Seite des Schneidbereiches zum Baum bzw. zu dem am Baum verbleibenden Teilstück des Astes gerichtet ist.

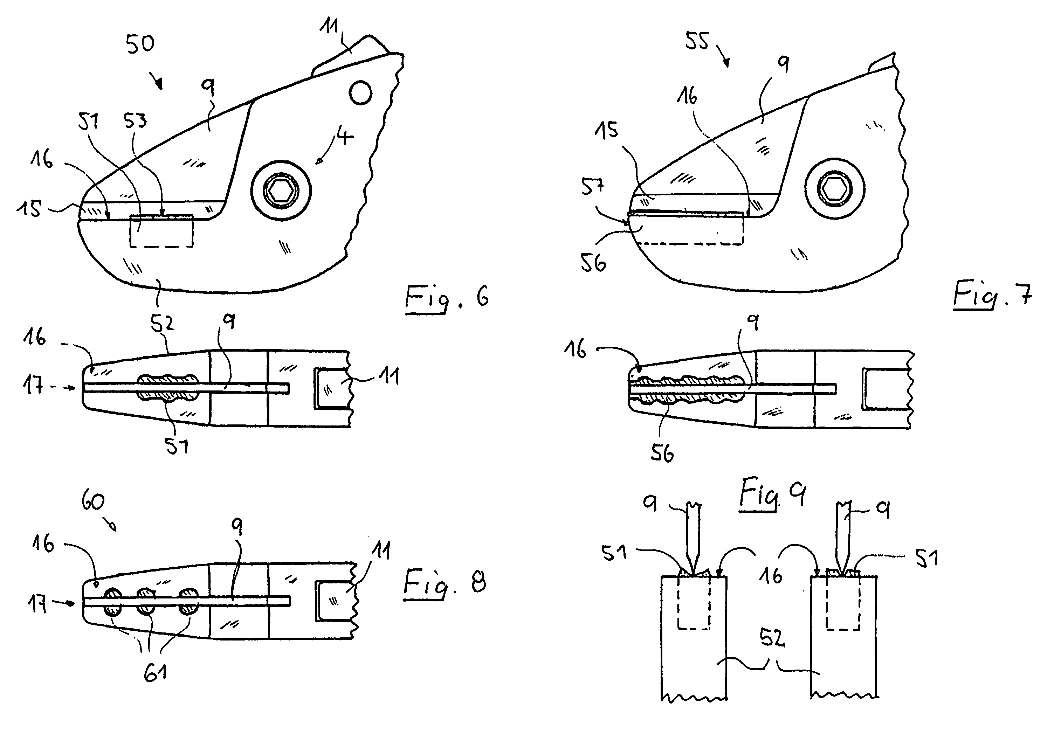

Die Form des Gummikörpers kann je nach Art und Dimensionierung der Schere bzw. der Scherenelemente varriieren. Eine Strukturierung in Längsrichtung der Schneide, wie sie durch die zweifache Verjüngung des Gummikörpers 21 gegeben ist, ist meist günstig, da dann einer Verschiebung des gesamten Gummikörpers durch dessen Zusammendrücken in der Aufnahme in Richtung des offenene Endes des Scherenmauls entgegengewirkt werden kann. Durch die zweifache Verjüngung ist eine formschlüssige Sicherung des Gummikörpers gegen Axialverschiebung in der Aufnahmeöffnung in Richtung Maulöffnung gegeben. Es ist auch möglich, anstatt des gezeigten, einteiligen und mehrfach taillierten Gummikissens mehrere Einzelkörper vorzusehen, wozu entsprechend mehrere Aufnahmeöffnungen am Amboß vorgesehen sein können (vgl. Fig. 8). Die Querschnittsform des Gummikörpers kann auch noch nach ästhetischen Gesichtspunkten ausgewählt werden, sofern die beschriebene Haltewirkung in ausreichendem Maße erhalten bleibt. Es ist auch möglich, zusätzlich einen oder mehrere gummielastische Halteelemente im Schneidbereich 17 des Amboß-Scherenelementes einzulassen, so daß die Schneide 15 zumindest abschnittsweise auch auf ein Halteelement drücken kann.

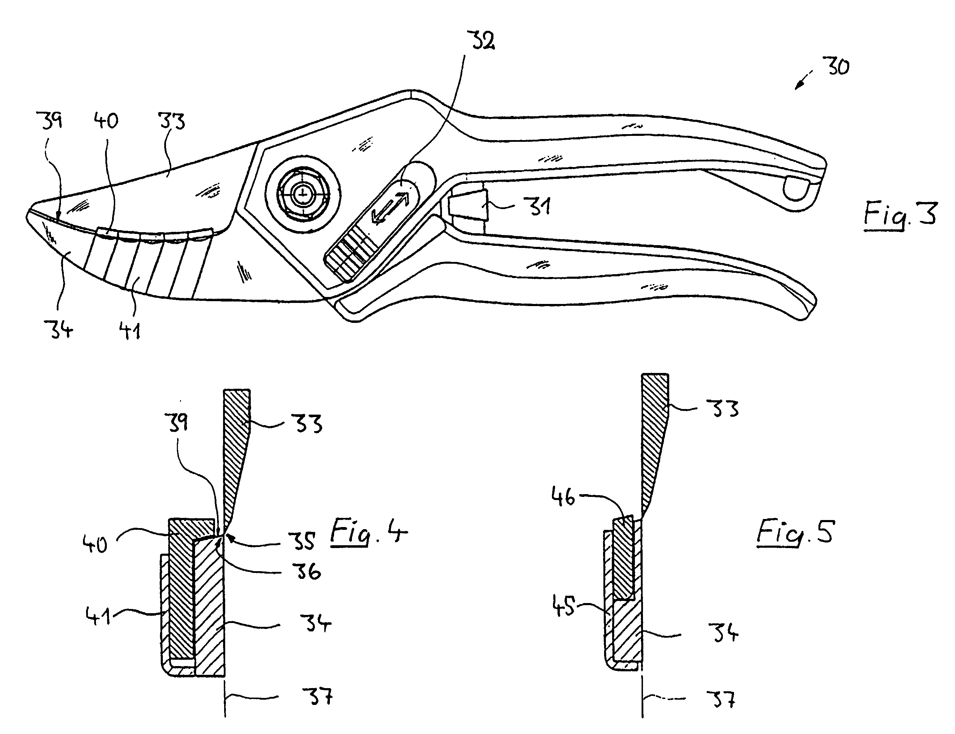

Anhand Fig. 3 ist zu erkennen, daß auch Zweischneider-Scheren durch erfindungsgemäße Haltemittel in ihrer Funktion verbessert werden können. Die gezeigte Zweischneider-Schere 30 ähnelt im Aufbau der soeben beschriebenen Amboßschere 1, wobei jedoch die Handgriffabschnitte der Scherenelemente etwas anders geformt sind, anstatt der Schraubendruckfeder 10 eine Rebscherenfeder 31 vorgesehen ist und anstatt des Knopfes 11 ein seitlicher Schieber 32 zur Arretierung bzw. Entarretierung der Schere. Wesentliche Unterschiede bestehen bei Aufbau und Funktion der Scherenelemente 33, 34. Wie besonders anhand der Figuren 4 und 5 erkennbar, haben Zweischneider-Scheren dieses Typs eine schmale Obermesserklinge 33 mit einer spitzwinklig begrenzten Schneidkante 35 sowie ein massiveres Untermesser 34 mit nur gering angeschrägter Klingenkante 36. Beim Schneidvorgang gleiten die Schneidkanten von Obermesser und Untermesser im Bereich einer Scherenebene 37 aneinander vorbei und zertrennen dabei das Schnittgut mit einem typischen Scherenschnitt.

Obwohl es auch bei diesem Scherentyp bei ausreichend breitem Untermesser möglich ist, im Scherenelement 34 ein oder mehrere gummiartige Halteelemente in entsprechende Aufnahmeöffnungen so einzulassen, daß sie die Oberseite 39 des Untermessers überragen, ist hier eine besonders für schmale Untermesser vorteilhafte Möglichkeit der Befestigung von Halteelementen realisiert. Bei der in Fig. 4 gezeigten Variante ist ein im gezeigten Querschnitt L-förmiges Gummielement 40 vorgesehen, das sich in Längsrichtung der Schere bzw. des Scherenelementes über eine Länge von z.B. ein bis drei Zentimetern erstreckt und mittels eines am Untermesser 34 anschraubbaren Befestigungselementes 41 am Untermesser so befestigbar ist, daß der kurze Schenkel des Gummikissens bis nahe an die Schneidebene 37 über die Oberseite 40 des Untermessers hinweg ragt. Beim Schnittvorgang wird dann das zu zerschneidende Schnittgut auf den kurzen Schenkel des Gummikissens 40 gedrückt und von diesem gehalten, bis es vollständig durchtrennt ist. Auch bei Amboßscheren kann eine derartige gesonderte seitliche Halterung vorgesehen sein, wobei dann das Gummielement seitlich auf die Amboßfläche ragen kann.

Bei der Ausführungsform gemäß Fig. 5 ist ebenfalls ein am Untermesser 34 beispielsweise durch Anschrauben anbringbares und von diesem lösbares winkelförmiges Befestigungselement 45 zum Halten eines Gummikörpers 46 am Untermesser vorgesehen. Hier hat jedoch das Untermesser auf seiner der Schneidebene 37 abgewandten Außenseite eine nach außen offene Rechteck-Ausnehmung für den Gummikörper. Dieser wird in die Ausnehmung paßgenau eingelegt und durch das danach aufgeschraubte Befestigungselement in der Ausnehmung festgeklemmt. Auch bei dieser Ausführungsform wird die Oberseite 47 des Untermessers von einem Abschnitt des Gummikörpers 46 überragt. Ähnlich wie bei der Ausführungsform gemäß Figuren 1 und 2 kann beim Schnittvorgang der Gummikörper in die zwischen Befestigungselement 45 und Untermesser 34 gebildete Aufnahmeöffnung so weit hineingedrückt werden, daß das Schnittgut auf der Oberkante des Haltemessers bzw. der Unteremsseroberseite 47 aufliegt und dadurch den Gummikörper nicht weiter zusammendrücken kann.

Im folgenden werden anhand der Figuren 6 bis 9 verschiedene Ausführungsformen für Amboßscheren erläutert, bei denen Haltemittel in Form von einem oder mehreren gummielastischen Halteelementen im Schneidbereich des Amboß-Scherenelementes derart eingelassen sind, daß die Schneide des anderen Scherenelementes zumindest abschnittsweise auf die Halteoberfläche des Halteelementes drücken und ggf. in dieses einschneiden kann. Die Amboßschere kann dabei, bis auf die für die Anbringung der Halteelemente vorgesehenen Einrichtungen am Amboß, den gleichen Aufbau wie die in Fig. 1 gezeigte Amboßschere haben. Entsprechende Bauteile sind daher aus Gründen der Übersichtlichkeit mit gleichen Bezugszeichen bezeichnet.

Auch bei der Amboß-Gartenschere 50 in Fig. 6 ist ein einziges, zweifach tailliertes Gummikissen 51 in den Amboß 52 so integriert, daß seine im wesentlichen ebene Halteoberfläche 53 um ein geringes Maß über die der Schneide 15 zugewandte Amboßfläche 16 hinausragt. Aus der Draufsicht in Fig. 6 (unten) ist ersichtlich, daß bei dieser Ausführungsform das Gummikissen 51 direkt unter der Schneide 15 bzw. mittig im Schneidbereich 17 liegt. Das Halteelement nimmt bei dieser Ausführungsform lediglich einen Teil der Amboßlänge parallel zur Schneidenrichtung ein. Dies führt dazu, daß die Schneide 15 im gezeigten, geschlossenen Zustand der Schere mit ihrem gelenknächsten und ihrem gelenkfernsten Abschnitt am Vorderende der Schere direkt auf der Amboßfläche aufliegt, während sie dazwischen auf das Gummikissen 51 trifft, dessen Breite so bemessen ist, daß es sich auf beiden Seiten des Schneidbereiches auf einer Breite erstreckt, die etwa der Breite des Rückens des oberen Scherenelementes 9 entspricht. Eine anhand von Fig. 7 gezeigte andere Ausführungsform 55 einer Amboßschere sieht vor, daß sich das in die Mitte des Ambosses in dessen Längsrichtung eingelassene Halteelement 56 im wesentlichen über die gesamte Länge des Amboß bis zu dessen Vorderende 57 erstreckt. Entsprechend der größeren Länge des Gummikörpers sind in dessen Längsrichtung fünf Verjüngungen vorgesehen, die in der entsprechend geformten Aufnahmeöffnung 58 eine formschlüssige Halterung in Längsrichtung des Gummikörpers bewirken. Eine in Fig. 8 in Draufsicht gezeigte weitere Ausführungsform sieht eine Aufteilung des Gummikissens in mehrere einzelne Elemente vor, so daß hier die Haltemittel 61 in Form mehrerer in Längsrichtung der Schere voneinander beabstandeter Einzelkörper vorliegen, die jeweils in entsprechende, formangepaßte Aufnahmeöffnungen im Schneidbereich der Schere, also unter dem oberen Scherenelement 9 mittig angeordnet sind.

Bei derartigen Anordnungen mit einem oder mehreren unterhalb der Schneide angeordneten, gummielastischen Halteelementen bzw. Kissen kann die Schneide 15 des oberen Scherenelementes 9 das Gummikissen in geschlossenem Zustand der Schere in seinem mittleren Bereich nach unten drücken, wie es in Fig. 9 (links) gezeigt ist. Beidseits der Schere stehen dann immer noch Halteelementabschnitte nach oben über die Amboßfläche 16 hinaus. Nach längerem Gebrauch der Schere kann sich auch ein Zustand einstellen, bei dem das im Schneidbereich angeordnete Gummikissen im Auftreffbereich der Schneide eingeschnitten ist und die Schneidkante der scharfen Schneide in einen Schlitz des Gummikissens eingreift (Fig. 9, rechts). Für die Funtion des Gummikissens, insbesondere für die Halte- und Polsterungsfunktion, ist diese Beschädigung des Gummikissens im Bereich der Haltefläche unerheblich, da die in der Phase vor vollständigem Durchtrennen des Schnittgutes bereitgestellte Haltefunktion hierdurch nicht beeinträchtigt wird. Das Schnittgut liegt zu Beginn des Schnittes zwischen der unteren Schneidkante des oberen Scherenelementes und der über die Amboßfläche hinausragenden Oberfläche des Gummikissens. Bei Andruck der Schneide und deren Eindringen in das Schnittgut drückt das Schnittgut das Gummikissen in dessen Aufnahme im Amboß ein und stützt sich vornehmlich an den festen Seitenteilen der Amboßfläche beidseits neben der Aufnahmeöffnung für das Gummikissen ab. Nach Durchtrennung des Schnittgutes nimmt das Gummikissen dann wieder die entspannte Form an, bei der die Halteoberfläche geringfügig, beispielsweise
1 mm bis 2 mm oberhalb der Amboßfläche liegt.

Allen Ausführungsformen ist gemeinsam, daß das zu zertrennende Schnittgut von den gummielastischen Haltemitteln nur so lange aufgrund des Anpreßdruckes festgehalten und gegen Herausrutschen aus der Scherenöffnung gesichert wird, solange das Schnittgut noch nicht durchtrennt ist. Das Schnittgut fällt also von der Schere ab, sobald der Schnitt vollendet ist, ohne daß ein Benutzer hierzu die Schere wieder öffnen müßte. Die erfindungsgemäße Haltemittel schaffen also eine Verbesserung hinsichtlich des unerwünschten Ausgleitens von Schnittgut aus Scherenöffnungen, ohne daß die sonstigen, von gattungsgemäßen Scheren gewohnten Eigenschaften nachteilig beeinflußt werden.

## Patentansprüche

1. Schere, insbesondere handgehaltene Garten- oder Astschere, mit zwei um eine Schwenkachse gegeneinander verschwenkbaren Scherenelementen, die zum gegenseitigen Schneideingriff vorgesehene Eingriffsabschnitte aufweisen, welche im geöffneten Zustand der Schere eine sich von der Schwenkachse erweiternde Scherenöffnung bilden, die sich beim Schließen der Schere verkleinert, wobei gesonderte, im wesentlichen nur bis zur Vollendung eines Schnittvorganges wirksame Haltemittel (21; 40; 46; 51; 56; 61) zum Festhalten von in die Scherenöffnung eingeführtem Schnittgut während des Schließens der Schere, vorgesehen sind,
**dadurch gekennzeichnet, daß** die Haltemittel (21; 40; 46; 51; 56; 61) mindestens eine elastisch nachgiebige Halteoberfläche (24; 53) bilden und derart ausgebildet und angeordnet sind, daß noch nicht oder nicht vollständig zertrenntes Schnittgut durch das Schließen der Schere unter Aufbau von Reibung flächig an die Halteoberfläche angepreßt wird und nach Vollendung der Durchtrennung unter Abbau des Anpreßdruckes von der Halteoberfläche freigebbar ist.

2. Schere nach Anspruch 1, **dadurch gekennzeichnet, daß** mindestens einer der Eingriffsabschnitte als glatte Schneidkante (15; 35, 36) ausgebildet ist und/oder daß keiner der Eingriffsabschnitte eine Zahnung aufweist.

3. Schere nach einem der vorhergehenden Ansprüche, **dadurch gekennzeichnet, daß** die Haltemittel mindestens ein gummielastisches Halteelement (21; 40; 46; 51; 56; 61) umfassen, das, vorzugsweise lösbar, an einem der Scherenelemente (8; 34; 52) angebracht ist, wobei das Halteelement vorzugsweise im wesentlichen aus einem gummielastischen Kunststoff oder aus Gummi besteht und/oder einstückig ausgebildet ist.

4. Schere nach einem der vorhergehenden Ansprüche, **dadurch gekennzeichnet, daß** mindestens ein Scherenelement (8; 52) mindestens eine Aufnahmeöffnung (22) zur Aufnahme mindestens eines gummielastischen Halteelementes aufweist, wobei die Aufnahmeöffnung vorzugsweise als in den Körper des Scherenelementes (8; 52) integrierte Öffnung ausgebildet ist.

5. Schere nach einem der vorhergehenden Ansprüche, **dadurch gekennzeichnet, daß** mindestens einem der Scherenelemente (34) mindestens eine gesonderte, an dem Scherenelement lösbar befestigbare, insbesondere anschraubbare Befestigungseinrichtung (41; 45) zur Befestigung mindestens eines gummielastischen Halteelementes (40; 46) an dem Scherenelement zugeordnet ist, wobei die Befestigungseinrichtung vorzugsweise mit dem Scherenelement eine Aufnahmeöffnung für das Halteelement bildet.

6. Schere nach Anspruch 5, **dadurch gekennzeichnet, daß** die Befestigungseinrichtung als Klemmeinrichtung ausgebildet ist.

7. Schere nach einem der vorhergehenden Ansprüche, **dadurch gekennzeichnet, daß** mindestens ein Halteelement (21; 46; 51; 56; 61) derart in einer zugeordneten Aufnahmeöffnung (22) anordenbar ist, daß ein die Haltefläche bildender Überstandsabschnitt des Halteelementes im Bereich einer an der Eingriffsfläche des Scherenelementes (8) angeordneten Mündung der Aufnahmeöffnung (22) über die Eingriffsfläche (16) des Scherenelementes geringfügig hinausragt.

8. Schere nach einem der vorhergehenden Ansprüche, **dadurch gekennzeichnet, daß** Haltemittel (21; 40; 46) außerhalb eines vorzugsweise langgestreckten Schneidbereiches (17) liegen, in dem ein Schneideingriff zwischen den Scherenelementen (8, 9; 33, 34) erfolgt.

9. Schere nach einem der vorhergehenden Ansprüche, **dadurch gekennzeichnet, daß** Haltemittel (21; 40; 46) nur an einer Seite eines vorzugsweise langgestreckten Schneidbereiches (17) vorgesehen sind.

10. Schere nach einem der vorhergehenden Ansprüche, **dadurch gekennzeichnet, daß** Haltemittel (51; 56; 61) derart in einem Schneidbereich (17) liegen, daß eine Schneide (15) der Schere beim Schließen der Schere auf die Haltemittel trifft.

11. Schere nach einem der vorhergehenden Ansprüche, **dadurch gekennzeichnet, daß** die Schere (1; 50; 55; 60) als Amboßschere ausgebildet ist, indem nur ein Scherenelement (9) als Eingriffsabschnitt eine vorzugsweise glatte Schneide (15) hat und an dem anderen Scherenelement (8; 52) eine nicht schneidende Gegenfläche (16) für die Schneide (15) ausgebildet ist, wobei vorzugsweise die Haltemittel (21; 51; 56; 61) ausschließlich an dem die Auflagefläche (16) aufweisenden Scherenelement (8; 52) angeordnet sind.

12. Schere nach Anspruch 1, **dadurch gekennzeichnet, daß** sie als Amboßschere ausgebildet ist und daß das als Amboß ausgebildete Scherenelement (8; 52) auf mindestens einer Seite des Schneidbereiches (17) eine elastisch nachgiebige Polsterung (21; 51; 56; 61) für Schnittgut aufweist.

13. Schere nach einem der Ansprüche 1 bis 10, **dadurch gekennzeichnet, daß** die Schere als Zweischneiden-Schere (30) ausgebildet ist, wobei vorzugsweise die Haltemittel (40; 46) nur an einem der Scherenelemente, vorzugsweise dem Untermesser (34), vorgesehen sind.

14. Schere nach Anspruch 1, **dadurch gekennzeichnet, daß** sie an mindestens einem ihrer Scherenelemente (8; 52) mindestens eine Aufnahmeöffnung (22) zur Aufnahme mindestens eines gummielastischen Halteelementes (21; 51; 56; 61) aufweist, wobei die Schere vorzugsweise als Amboßschere ausgebildet ist und die Aufnahmeöffnung an dem den Amboß bildenden Scherenelement (8; 52) angeordnet ist und in die Amboßfläche (16) mündet.

15. Schere nach Anspruch 1, **dadurch gekennzeichnet, daß** sie an mindestens einem ihrer Scherenelemente (34) mindestens eine Einrichtung zur Befestigung einer zum Halten eines gummielastischen Halteelements an dem Scherenelement vorgesehenen Befestigungseinrichtung (41; 45) aufweist, insbesondere mindestens eine seitliche Gewindebohrung.

## Claims

1. Shears, particularly hand-held garden or pruning shears or secateurs, with two shear elements pivotable against one another about a pivot axis and which have engaging portions provided for mutual cutting engagement, which in the opened state of the shears form a shear opening widening from the pivot axis and which become smaller on closing the shears, and there are separate holding means (21; 40; 46; 51; 56; 61) provided essentially only acting until the cutting process is completed for retaining cutting material introduced into the shear opening during the closing of the shears, wherein the holding means (21; 40; 46; 51; 56; 61) form at least one elastically flexible holding surface (24; 53) and are so constructed and arranged that not yet or not yet completely cut through cutting material is pressed by the closing of the shears and accompanied by the building up of friction in areal manner onto the holding surface and after completing cutting through and accompanied by the reduction of the contact pressure is released from the holding surface.

2. Shears according to claim 1, wherein at least one of the engaging portions is constructed as a smooth cutting edge (15; 35, 36) and/or wherein none of the engaging portions have teeth.

3. Shears according to one of the preceding claims, wherein the holding means incorporate at least one rubber-like holding element (21; 40; 46; 51; 56; 61) which is fitted in preferably detachable manner to one of the shear elements (8; 34; 52), the holding element preferably being constructed substantially from a rubber-like plastic or rubber and/or is in one piece.

4. Shears according to one of the preceding claims, wherein at least one shear element (8; 52) has at least one reception opening (22) for receiving at least one rubber-like holding element, the reception opening preferably being constructed as an opening integrated into the body of the shear element (8; 52).

5. Shears according to one of the preceding claims, wherein with at least one of the shear elements (34) is associated at least separate fastening device (41; 45) detachably fastenable and in particular screwable to the shear element for fastening at least one rubber-like holding element (40; 46) on the shear element, the fastening device preferably with the shear element forming a reception opening for the holding element.

6. Shears according to claim 5, wherein the fastening device is constructed as a clamping device.

7. Shears according to one of the preceding claims, wherein at least one holding element (21; 46; 51; 56; 61) is so positionable in an associated reception opening (22) that a projecting portion of the holding element forming the holding surface in the vicinity of a mouth of the reception opening (22) located on the engagement surface of the shear element (8) projects slightly beyond the engagement surface (16) of the shear element.

8. Shears according to one of the preceding claims, wherein holding means (21; 40; 46) are located outside a preferably elongated cutting area (17), where a cutting engagement takes place between the shear elements (8; 9; 33, 34).

9. Shears according to one of the preceding claims, wherein holding means (21; 40; 46) are provided only one side of a preferably elongated cutting area (17).

10. Shears according to one of the preceding claims, wherein holding means (51; 56; 61) are located in a cutting area (17) in such a way that a cutting edge (15) of the shears encounters the holding means on closing the shears.

11. Shears according to one of the preceding claims, wherein the shears (1; 50; 55; 60) are constructed as anvil shears, in that only one shear element (9) as the engaging portion has a preferably smooth cutting edge (15) and on the other shear element (8; 52) is constructed a non-cutting mating surface (16) for the cutting edge (15) and preferably the holding means (21; 51; 56; 61) are exclusively provided on the shear element (8; 52) having the bearing surface (16).

12. Shears according to claim 1, wherein they are constructed as anvil shears and the shear element (8; 52) constructed as the anvil has on at least one side of the cutting area (17) elastically flexible cushioning (21; 51; 56; 61) for cutting material.

13. Shears according to one of the claims 1 to 10, wherein the shears are constructed as double edged shears (30) and preferably the holding means (40; 46) are provided on only one of the shear elements, preferably the lower blade (34).

14. Shears according to claim 1, wherein they have on at least one of their shear elements (8; 52) at least one reception opening (22) for receiving at least one rubber-like holding element (21; 51; 56; 61), the shears preferably being constructed as anvil shears and the reception opening is located on the shear element (8; 52) forming the anvil and issues into the anvil surface (16).

15. Shears according to claim 1, wherein they have on at least one of their shear elements (34) at least one device for fastening a fastening device (41; 45) provided for retaining a rubber-like holding element on the shear element and in particular at least one lateral tapped hole.

## Revendications

1. Cisaille, notamment sécateur manuel pour le jardinage ou pour les branches, avec deux éléments de cisaille pouvant être pivotés réciproquement autour d'un axe de pivotement, qui présentent des sections d'engagement pour un engagement de coupe réciproque, qui forment une ouverture de cisaille, quand la cisaille est ouverte, qui s'élargit depuis l'axe de pivotement et qui devient plus petite quand la cisaille se ferme, des moyens de retenue (21 ; 40 ; 46 ; 51 ; 56 ; 61) distincts, agissant essentiellement seulement jusqu'à la fin d'une opération de coupe, étant prévus pour retenir du matériau à couper introduit dans l'ouverture de cisaille pendant la fermeture de la cisaille, **caractérisée en ce que** les moyens de retenue (21 ; 40 ; 46 ; 51 ; 56 ; 61) forment au moins une surface de retenue (24 ; 53) élastiquement souple et qu'ils sont réalisés et disposés de manière que, par la fermeture de la cisaille, le matériau à couper pas encore ou pas encore entièrement sectionné, est serré platement contre la surface de retenue tout en produisant une friction, et qu'après le découpage il peut être relâché de la surface de retenue sous l'effet d'un affaiblissement de la pression de serrage.

2. Cisaille d'après la revendication 1, **caractérisée en ce qu'**au moins une des sections d'engagement est réalisée en tant qu'arête coupante (15 ; 35 ; 36) lisse et/ou **en ce qu'**aucune sections d'engagement présente une denture.

3. Cisaille d'après une des revendications précédentes, **caractérisée en ce que** les moyens de retenue comprennent au moins un élément de retenue (21 ; 40 ; 46 ; 51 ; 56 ; 61) élastique à la manière du caoutchouc, qui est appliqué de manière préférablement démontable sur un des éléments de cisaille (8 ; 34 ; 52), l'élément de retenue étant composé de préférence essentiellement d'une matière plastique élastique genre caoutchouc ou en caoutchouc et/ou l'élément de retenue étant réalisée d'une seule pièce.

4. Cisaille d'après une des revendications précédentes, **caractérisée en ce qu'**au moins un élément de cisaille (8 ; 52) présente au moins une ouverture de logement (22) pour le logement d'au moins un élément de retenue élastique à la manière du caoutchouc, l'ouverture de logement étant réalisée de préférence en tant qu'ouverture intégrée dans le corps de l'élément de cisaille (8 ; 52).

5. Cisaille d'après une des revendications précédentes, **caractérisée en ce qu'**au moins un dispositif de fixation (41 ; 45) distinct, pouvant être appliqué de manière démontable sur l'élément de cisaille, notamment par vissage est associé à au moins un des éléments de cisaille (34) pour la fixation sur l'élément de cisaille d'au moins un élément de retenue (40 ; 46) élastique à la manière du caoutchouc, le dispositif de fixation formant de préférence avec l'élément de cisaille une ouverture de logement pour l'élément de retenue.

6. Cisaille d'après la revendication 5, **caractérisée en ce que** le dispositif de fixation est réalisé comme moyen de pinçage.

7. Cisaille d'après une des revendications précédentes, **caractérisée en ce qu'**au moins un élément de retenue (21 ; 46 ; 51 ; 56 ; 61) peut être disposé dans une ouverture de logement (22) correspondante de telle manière qu'une section saillante de l'élément de retenue, formant la surface de retenue, saille légèrement au-delà de la surface d'engagement (16) de l'élément de cisaille, dans le domaine d'une bouche de l'ouverture de logement (22), disposée auprès de la surface d'engagement de l'élément de cisaille (8).

8. Cisaille d'après une des revendications précédentes, **caractérisée en ce que** des moyens de retenue (21 ; 40 ; 46) sont situés à l'extérieur d'un domaine de coupe (17) préférablement oblong, dans lequel a lieu un engagement de coupe entre les éléments de cisaille (8, 9 ; 33, 34).

9. Cisaille d'après une des revendications précédentes, **caractérisée en ce que** des moyens de retenue (21 ; 40 ; 46) sont prévus uniquement d'un côté d'un domaine de coupe (17) préférablement oblong.

10. Cisaille d'après une des revendications précédentes, **caractérisée en ce que** des moyens de retenue (51, 56 ; 61) sont situés dans un domaine de coupe (17) de telle manière qu'une arête coupante (15) de la cisaille donne contre les moyens de retenue, pendant la fermeture.

11. Cisaille d'après une des revendications précédentes, **caractérisée en ce que** la cisaille (1 ; 50 ; 55 ; 60) est réalisée en tant que cisaille à enclume, par le fait qu'un seul élément de cisaille (9) présente en tant que section d'engagement une arête coupante (15) préférablement lisse et que sur l'autre élément de cisaille (8 ; 52) une contre-surface (16) non coupante est réalisée pour l'arête coupante (15), les moyens de retenue (21 ; 51 ; 56 ; 61) étant de préférence disposés exclusivement sur l'élément de cisaille (8 ; 52) présentant la surface d'appui (16).

12. Cisaille d'après la revendication 1, **caractérisée en ce qu'**elle est réalisée en tant que cisaille à enclume et **en ce que** l'élément de cisaille (8 ; 52) réalisé en tant que enclume présente au moins d'un côté du domaine de coupe (17) un capiton (21 ; 51 ; 56 ; 61) élastiquement souple pour le matériau à couper.

13. Cisaille d'après une des revendications de 1 à 10, **caractérisée en ce que** la cisaille est réalisée en tant que cisaille à double section (30), les moyens de retenue (40 ; 46) étant prévus de préférence uniquement sur l'un des éléments de cisaille, de préférence sur la lame inférieure de cisaille (34).

14. Cisaille d'après la revendication 1, **caractérisée en ce qu'**elle présente sur au moins un des éléments de cisaille (8 ; 52) au moins une ouverture de logement (22) pour le logement d'au moins un élément de retenue (21 ; 51 ; 56 ; 61) élastique à la manière du caoutchouc, la cisaille étant réalisée de préférence comme cisaille à enclume et l'ouverture de logement étant disposée sur l'élément de cisaille (8 ; 52) formant l'enclume et débouchant dans la surface d'enclume (16).

15. Cisaille d'après la revendication 1, **caractérisée en ce qu'**elle présente sur au moins un des ses éléments de cisaille (34) au moins un dispositif pour la fixation d'un dispositif de fixation (41 ; 45), prévu sur l'élément de cisaille pour tenir un élément de retenue élastique à la manière du caoutchouc, notamment au moins un trou fileté latéral.
